(19) Europäisches Patentamt
European Patent Office
Office européen des brevets

(11) **EP 4 764 436 A1**

(12) **DEMANDE DE BREVET EUROPEEN**

(43) Date de publication:
**24.06.2026 Bulletin 2026/26**

(21) Numéro de dépôt: **25224859.6**

(22) Date de dépôt: **18.12.2025**

(51) Classification Internationale des Brevets (IPC):
**G01K 7/00** *(2006.01)*  **G01K 7/42** *(2006.01)*

(52) Classification Coopérative des Brevets (CPC):
**G01K 7/00; G01K 7/42;** G01K 2217/00

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH LA MA MD TN**

(30) Priorité: **20.12.2024  FR 2414877**

(71) Demandeurs:
• **Commissariat à l'Energie Atomique et aux Energies Alternatives**
**75015 Paris (FR)**

• **BHG**
**68100 Mulhouse (FR)**

(72) Inventeurs:
• **CHAINTREUIL, Nicolas**
**38054 GRENOBLE CEDEX 09 (FR)**
• **LESPINATS, Sylvain**
**38054 GRENOBLE CEDEX 09 (FR)**

(74) Mandataire: **Cabinet Beaumont**
**4, Place Robert Schuman**
**B.P. 1529**
**38025 Grenoble Cedex 1 (FR)**

(54) **PROCEDE ET SYSTEME DE DETERMINATION D'UNE TEMPERATURE NOCTURNE AU MOYEN D'UN MODULE PHOTOVOLTAÏQUE**

(57) La présente description concerne un procédé de détermination d'une température ambiante extérieure nocturne $T_a'$ dans un système comportant un module photovoltaïque (104), le procédé comprenant:

a) déterminer, au moyen d'un dispositif électronique de traitement (110), à partir de mesures du courant de court-circuit $I_{sc}$ et de mesures de la tension de circuit ouvert $V_{oc}$ du module photovoltaïque, une première valeur $T_{a1}$ représentative de la température ambiante extérieure au voisinage de l'aube d'une première journée et une deuxième valeur $T_{a2}$, représentative de la température ambiante extérieure au voisinage du crépuscule de la première journée ; et

b) calculer, au moyen du dispositif électronique de traitement, à partir de la première valeur Tal et de la deuxième valeur $T_{a2}$, en utilisant une fonction mathématique $T_a'$ prédéfinie, un ensemble d'une ou plusieurs valeurs représentatif de l'évolution de la température ambiante extérieure nocturne au cours de la nuit suivant ladite première journée.

FIG 2

**Description**

Domaine technique

La présente description concerne de façon générale les systèmes intégrant des modules photovoltaïques, et vise plus particulièrement un procédé et un système de détermination d'une température nocturne au moyen d'un module photovoltaïque.

Technique antérieure

De nombreux systèmes comprenant un ou plusieurs modules photovoltaïques configurés pour alimenter une charge, par exemple une batterie électrique, ont été proposés.

Dans de nombreuses situations, il peut être souhaitable de mesurer ou estimer une température au sein du système ou à l'extérieur du système, par exemple en vue de commander en conséquence un élément du système.

Pour ce faire, on prévoit de façon classique une sonde de température dédiée à cette mesure. L'intégration d'une telle sonde au sein du système peut toutefois poser des difficultés techniques et entraîner un coût additionnel.

On a déjà proposé, par exemple dans la demande de brevet français N°FR2009735 (numéro de dépôt) déposée le 24 septembre 2020, dans la demande de brevet français N°FR2201446 (numéro de dépôt) déposée le 18 février 2022, et dans la demande de brevet français N°FR2306348 (numéro de dépôt) déposée le 20 juin 2023, des procédés et systèmes de mesure de température ambiante au moyen d'un module photovoltaïque, dans lesquels une température ambiante extérieure est calculée à partir d'une mesure d'un courant de court-circuit et d'une tension de circuit ouvert du module photovoltaïque.

Ces systèmes permettent avantageusement de déterminer la température ambiante au voisinage du module photovoltaïque sans nécessiter une sonde de température dédiée ou un capteur de température dédié.

Une limitation de ces systèmes est qu'ils ne permettent de mesurer la température ambiante extérieure que pendant des phases d'utilisation dites diurnes du système, pendant lesquelles le module photovoltaïque reçoit un rayonnement solaire significatif.

On s'intéresse ici plus particulièrement à la détermination de la température ambiante pendant des phases d'utilisation nocturnes d'un système comprenant un module photovoltaïque.

Résumé de l'invention

Un mode de réalisation prévoit un procédé de détermination d'une température ambiante extérieure nocturne $T_a'$ dans un système comportant un module photovoltaïque, le procédé comprenant les étapes suivantes :

a) déterminer, au moyen d'un dispositif électronique de traitement, à partir de mesures du courant de court-circuit $I_{sc}$ et de mesures de la tension de circuit ouvert $V_{oc}$ du module photovoltaïque, une première valeur $T_{a1}$ représentative de la température ambiante extérieure au voisinage de l'aube d'une première journée et une deuxième valeur $T_{a2}$ représentative de la température ambiante extérieure au voisinage du crépuscule de la première journée ; et

b) calculer, au moyen du dispositif électronique de traitement, à partir de la première valeur $T_{a1}$ et de la deuxième valeur $T_{a2}$ déterminées à l'étape a), en utilisant une fonction mathématique $T_a'$ prédéfinie, un ensemble d'une ou plusieurs valeurs représentatif de l'évolution de la température ambiante extérieure nocturne au cours de la nuit suivant ladite première journée.

Selon un mode de réalisation, la fonction mathématique $T_a'$ est une fonction linéaire, gaussienne, polynomiale, spline, ou une fonction de relaxation exponentielle.

Selon un mode de réalisation, la fonction mathématique $T_a'$ est une fonction de relaxation exponentielle définie par la relation suivante :

[Math 4]

$$T_a'(h, Ta1, Ta2) = Ta1 + (Ta2 - Ta1) \times \exp\big(-a \times (h - h2)\big)$$

où h est une variable temporelle, a est un paramètre de relaxation et h2 est un instant correspondant au crépuscule de la première journée.

Selon un mode de réalisation, le paramètre de relaxation a est stocké dans une mémoire du dispositif électronique de traitement.

Selon un mode de réalisation, la première valeur $T_{a1}$ est déterminée à partir d'une ou plusieurs valeurs de température ambiante diurne, chaque valeur de température ambiante diurne étant calculée à partir à partir d'une mesure du courant de court-circuit $I_{sc}$ et d'une mesure de la tension de circuit ouvert $V_{oc}$ du module photovoltaïque effectuées au voisinage de l'aube.

Selon un mode de réalisation, la deuxième valeur $T_{a2}$ est déterminée à partir d'une ou plusieurs valeurs de température ambiante diurne, chaque valeur de température ambiante diurne étant calculée à partir à partir d'une mesure du courant de court-circuit $I_{sc}$ et d'une mesure de la tension de circuit ouvert $V_{oc}$ du module photovoltaïque effectuées au voisinage du crépuscule.

Selon un mode de réalisation, à l'étape a), la valeur du courant de court-circuit $I_{sc}$ du module photovoltaïque est déterminée par mesure d'une tension aux bornes d'une résistance de shunt connectée aux bornes du module photovoltaïque.

Selon un mode de réalisation, la valeur de la résistance de shunt est telle que la tension aux bornes de la résistance de shunt lors de la mesure du courant de court-circuit $I_{sc}$ du module photovoltaïque est inférieure à 5 % de la tension de circuit ouvert $V_{oc}$ du module photovoltaïque.

Selon un mode de réalisation, le procédé comporte en outre une étape de commande d'un élément commandable électriquement du système en tenant compte d'au moins une valeur de la température ambiante nocturne calculée à l'étape b).

Un autre mode de réalisation prévoit un système comprenant un module photovoltaïque et un dispositif électronique de traitement configuré pour mettre en œuvre le procédé susmentionné.

Selon un mode de réalisation, le système comprend un dispositif d'occultation motorisé alimenté par le module photovoltaïque.

Brève description des dessins

Ces caractéristiques et avantages, ainsi que d'autres, seront exposés en détail dans la description suivante de modes de réalisation particuliers faite à titre non limitatif en relation avec les figures jointes parmi lesquelles :

la figure 1 est une vue en perspective illustrant de façon schématique un exemple d'un système intégrant un module photovoltaïque ;

la figure 2 représente de façon schématique, sous forme de blocs, un exemple d'un système de mesure de température selon un mode de réalisation ;

la figure 3 représente de façon schématique, sous forme de blocs, un exemple d'un procédé de détermination d'une température selon un mode de réalisation ;

la figure 4 représente de façon schématique, sous forme de blocs, un exemple d'un procédé d'estimation d'une température nocturne selon un mode de réalisation ; et

la figure 5 est un graphe illustrant schématiquement une évolution d'une température nocturne réelle et d'une température nocturne estimée selon un mode de réalisation.

Description des modes de réalisation

De mêmes éléments ont été désignés par de mêmes références dans les différentes figures. En particulier, les éléments structurels et/ou fonctionnels communs aux différents modes de réalisation peuvent présenter les mêmes références et peuvent disposer de propriétés structurelles, dimensionnelles et matérielles identiques.

Par souci de clarté, seuls les étapes et éléments utiles à la compréhension des modes de réalisation décrits ont été représentés et sont détaillés. En particulier, les circuits de contrôle et de traitement adaptés à mettre en œuvre les procédés décrits n'ont pas été détaillés, la réalisation de tels circuits étant à la portée de la personne du métier à partir des indications de la présente description. En outre, la réalisation des modules photovoltaïques des systèmes décrits n'a pas été détaillée, les modes de réalisation décrits étant compatibles avec tous ou la plupart des modules photovoltaïques connus.

Sauf précision contraire, lorsque l'on fait référence à deux éléments connectés entre eux, cela signifie directement connectés sans éléments intermédiaires autres que des conducteurs, et lorsque l'on fait référence à deux éléments reliés (en anglais "coupled") entre eux, cela signifie que ces deux éléments peuvent être connectés ou être reliés par l'intermédiaire d'un ou plusieurs autres éléments.

Dans la description qui suit, lorsque l'on fait référence à des qualificatifs de position absolue, tels que les termes "avant", "arrière", "haut", "bas", "gauche", "droite", etc., ou relative, tels que les termes "dessus", "dessous", "supérieur", "inférieur", etc., ou à des qualificatifs d'orientation, tels que les termes "horizontal", "vertical", etc., il est fait référence sauf précision contraire à l'orientation des figures.

Sauf précision contraire, les expressions "environ", "approximativement", "sensiblement", et "de l'ordre de" signifient à 10 % près, de préférence à 5 % près.

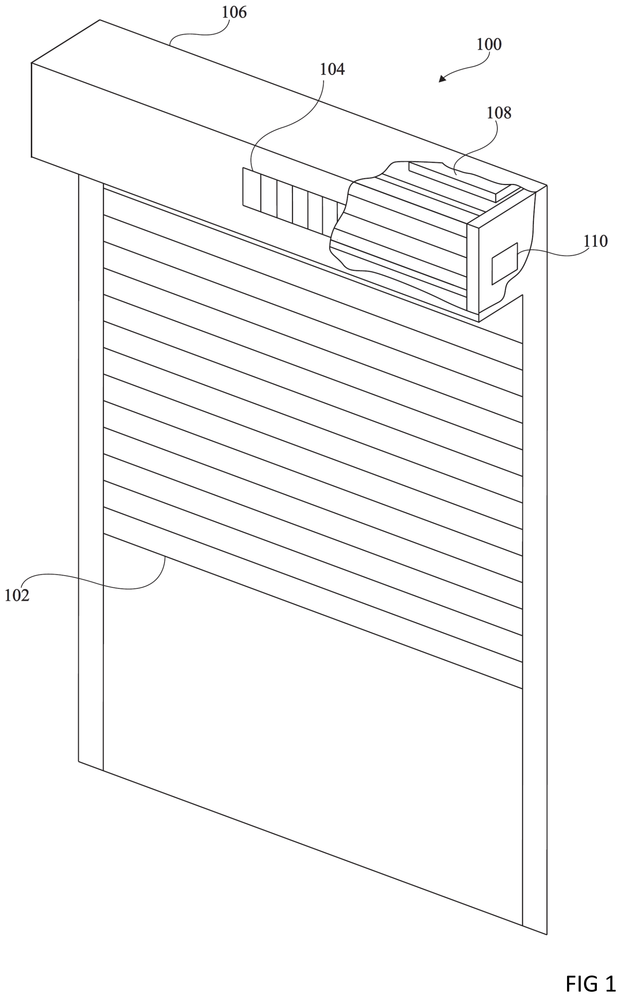

La figure 1 est une vue en perspective illustrant de façon schématique un exemple d'un système 100 intégrant un module photovoltaïque.

Dans cet exemple, le système 100 est un dispositif d'occultation motorisé de type volet roulant.

Le dispositif 100 comporte un tablier 102 constitué par un assemblage de plusieurs lames, et comporte en outre un arbre motorisé (non visible sur la figure 1) sur lequel peut être enroulé le tablier 102 et à partir duquel peut être déroulé le tablier 102.

Le dispositif 100 comporte en outre un générateur photovoltaïque ou module photovoltaïque 104, comportant un ou plusieurs panneaux photovoltaïques. A titre d'exemple, le dispositif 100 comporte un caisson 106 dans lequel est disposé l'arbre motorisé. Le ou les panneaux photovoltaïques du module photovoltaïque 104 sont par exemple disposés sur le caisson 106.

Le dispositif 100 comporte de plus une batterie électrique 108 alimentée en énergie électrique par le module photovoltaïque 104 et alimentant en énergie électrique le dispositif 100, et en particulier le moteur d'entraînement (non visible sur la figure 1) de l'arbre d'enroulement du tablier 102. A titre d'exemple, la batterie 108 est disposée dans le caisson 106.

Le dispositif 100 comporte en outre un dispositif électronique de contrôle 110, permettant notamment de commander le moteur du dispositif. A titre d'exemple, le dispositif de contrôle 110 est disposé à l'intérieur du caisson 106.

Le dispositif électronique de contrôle 110 peut comprendre divers capteurs, ainsi qu'un circuit électronique de traitement des données mesurées par les capteurs. A titre d'exemple, le circuit électronique de traitement comprend une unité de traitement de type microcontrôleur, et peut en outre comprendre un ou plusieurs circuits mémoire.

Le dispositif d'occultation 100 est destiné à être monté devant une ouverture (non visible sur la figure 1) d'un bâtiment, apte à laisser passer la lumière, par exemple devant une fenêtre équipée d'une vitre transparente.

Dans cet exemple, le dispositif électronique de contrôle 110 est configuré pour mettre en œuvre un procédé de commande automatique dit intelligent du dispositif d'occultation, tenant compte notamment de l'irradiation solaire et de la température extérieure. Un tel procédé permet de gérer les apports solaires dans le bâtiment, par exemple en privilégiant l'ouverture des volets exposés au soleil lorsque les températures extérieures sont basses, et/ou en fermant les volets exposés au soleil lorsque les températures extérieures sont élevées.

L'irradiation solaire peut être estimée par le dispositif électronique de contrôle 110 en mesurant le courant de court-circuit du module photovoltaïque 104.

La température extérieure peut quant à elle être mesurée au moyen d'une sonde de température. La prévision d'une telle sonde induit toutefois un coût supplémentaire. De plus, l'intégration d'une telle sonde dans le dispositif 100 peut présenter des difficultés techniques.

Selon un aspect d'un mode de réalisation, on prévoit d'utiliser le module photovoltaïque 104 pour estimer la température.

Pour cela, pendant des phases d'irradiation solaire du module photovoltaïque, typiquement pendant la journée, le dispositif de contrôle 110 est configuré pour, lors d'une phase de mesure de température, mesurer la tension en circuit ouvert $V_{oc}$ du module photovoltaïque 104 et mesurer le courant de court-circuit $I_{sc}$ du module photovoltaïque 104, puis calculer une valeur $T_a$ représentative de la température ambiante au voisinage du module photovoltaïque 104, en fonction de la valeur de la tension en circuit ouvert $V_{oc}$ et de la valeur du courant de court-circuit $I_{sc}$ mesurées. Plus particulièrement, la valeur $T_a$ peut être calculée au moyen d'un modèle mathématique prenant en entrée les valeurs $I_{sc}$ et $V_{oc}$ mesurées, par exemple tel que décrit dans les demandes de brevets français N°FR2009735, N°FR2201446 et N°FR2306348 susmentionnées.

La tension $V_{oc}$ et le courant $I_{sc}$ peuvent être mesurés respectivement par un capteur de tension et par un capteur de courant du dispositif électronique de contrôle 110. Le dispositif de contrôle 110 peut par ailleurs comprendre des interrupteurs commandables pour mettre le module photovoltaïque en circuit ouvert lors de la mesure de la tension $V_{oc}$ et en court-circuit lors de la mesure du courant $I_{sc}$.

Le courant $I_{sc}$ est par exemple déterminé par mesure d'une tension aux bornes d'une résistance de shunt connectée aux bornes du module photovoltaïque. La résistance de shunt utilisée pour la mesure du courant de court-circuit $I_{sc}$ est de préférence relativement faible de façon à obtenir une mesure précise. A titre d'exemple, la résistance de shunt est telle que la chute de tension aux bornes de la résistance de shunt pendant la mesure du courant $I_{sc}$ ne dépasse pas 5 %, et soit de préférence de l'ordre de 1 % de la valeur de la tension de circuit ouvert $V_{oc}$ du module. Par exemple, pour un module photovoltaïque présentant une tension de circuit ouvert $V_{oc}$ de l'ordre de 7,5 V et un courant de court-circuit $I_{sc}$ de l'ordre de 0,75 A, une résistance de shunt de l'ordre de 0,1 ohms peut être prévue (conduisant à une chute de tension aux bornes de la résistance de shunt de l'ordre de 0,075 V soit 1 % de la tension $V_{oc}$).

Par température ambiante, on entend ici la température de l'air ambiant extérieur, c'est-à-dire de l'air à l'extérieur du module, au voisinage du module, par exemple à une distance de 1 à 30 cm du module, par exemple à une distance de 1 à 10 cm du module.

A titre d'exemple, la valeur $T_a$ représentative de la température ambiante est calculée au moyen d'un modèle mathématique du type décrit dans la demande de brevet français FR2306348 susmentionnée, c'est-à-dire directement à partir d'une mesure de la tension de circuit ouvert $V_{oc}$ et du courant de court-circuit $I_{sc}$ du module, en utilisant pour cela un modèle mathématique unique à deux variables d'entrée $V_{oc}$ et $I_{sc}$, le modèle comportant des coefficients fixes pouvant être déterminés sans données d'utilisation du module ou avec seulement une quantité limitée de données d'utilisation du module.

Le modèle décrit par exemple le fonctionnement du module photovoltaïque à l'aide d'une diode équivalente. L'un des coefficients fixes du modèle est par exemple défini en fonction d'un facteur d'idéalité de la diode équivalente du modèle, par exemple par une fonction linéaire du facteur d'idéalité de la diode équivalente du module photovoltaïque. Les autres coefficients fixes du modèle sont par exemple indépendants des caractéristiques du module photovoltaïque.

Ceci permet de faciliter la calibration du modèle, puisqu'il suffit ainsi de connaître le facteur d'idéalité de la diode équivalente du module photovoltaïque pour définir les coefficients fixes du modèle.

Le facteur d'idéalité de la diode équivalente du module photovoltaïque, en électron volt (eV), peut être fourni directement par le fabricant du module photovoltaïque, ou être déterminé par des mesures relativement simples, par exemple à partir de deux mesures de la caractéristique I(V) du module photovoltaïque, à deux niveaux d'irradiation différents. A titre d'exemple, le facteur d'idéalité de la diode équivalente du module photovoltaïque peut être déterminé comme décrit dans l'article intitulé « Improvement and validation of a model for photovoltaic array performance », de W. De Soto et al. (Solar Energy, Vol 80, p78-88, 2006).

A titre d'exemple, le modèle mathématique est défini par l'équation suivante :

[Math 1]

$$T_a(I_{sc}, V_{oc}) = a \times V_{oc} + b \times \ln(I_{sc}) + c \times I_{sc} + d + e$$

où a, b, c, d et e sont les coefficients fixes du modèle.

Les coefficients a, b, c, d sont des coefficients indépendants des paramètres physiques du module photovoltaïque. Le coefficient fixe e est quant à lui dépendant uniquement du facteur d'idéalité de la diode, et est défini comme étant une fonction linéaire du facteur d'idéalité. Les coefficients fixes a, b, c, d et e du modèle peuvent être stockés dans un circuit mémoire du dispositif électronique de contrôle 110. Le coefficient e est par exemple déterminé lors d'une phase de calibration, à la conception du système, par exemple au moyen d'une chambre de calibration permettant de faire varier de façon contrôlée l'irradiation pour mesurer le facteur d'idéalité de la diode équivalente au module photovoltaïque. A titre de variante, le coefficient e peut être déterminé automatiquement par le circuit électronique de contrôle 110, au moyen de toute méthode connue de détermination du facteur d'idéalité de la diode équivalente d'un module photovoltaïque.

Le procédé décrit ci-dessus permet d'estimer la température ambiante $T_a$ de façon précise, à partir d'une mesure du courant de court-circuit $I_{sc}$ du module et d'une mesure de la tension de circuit ouvert $V_{oc}$ du module, et ce par un calcul simple nécessitant des ressources calculatoires limitées et pouvant aisément être mis en œuvre par un circuit électronique de contrôle embarqué du système intégrant le module photovoltaïque. On peut ainsi se passer d'une sonde de température extérieure dédiée à cette mesure.

De façon avantageuse, le modèle mathématique mis en œuvre dans le procédé décrit ci-dessus peut aisément être adapté à différents types de modules photovoltaïques, sans nécessiter une caractérisation complète du module sur toute l'étendue des plages de température ambiante et d'irradiation auxquelles le module est susceptible d'être soumis.

A titre de variante, la température $T_a$ est calculée au moyen d'un modèle mathématique du type décrit dans la demande de brevet FR2009735 susmentionnée, le modèle comportant des coefficients pouvant être déterminés à partir d'une mesure du courant de court-circuit $I_{sc}$ du module photovoltaïque 104 et de caractéristique du module photovoltaïque 104.

La température ambiante $T_a$ est par exemple déterminée par l'équation suivante :

[Math 2]

$$T_a = a \cdot V_{oc} + b$$

où a et b sont des coefficients variant en fonction de l'irradiation solaire $I_{rr}$, calculés par une relation polynomiale d'ordre, par exemple d'ordre 2, en fonction de la mesure du courant de court-circuit $I_{sc}$, les coefficients de la fonction polynomiale étant déterminés à partir des caractéristiques du module photovoltaïque 104.

Dans une autre variante, la température $T_a$ est calculée au moyen d'un modèle mathématique du type décrit dans la demande de brevet français FR2201446 susmentionnée, directement à partir d'une mesure de la tension de circuit ouvert $V_{oc}$ et du courant de court-circuit $I_{sc}$ du module photovoltaïque, en utilisant pour cela un modèle mathématique polynomial unique à deux variables d'entrée $V_{oc}$ et $I_{sc}$.

Les coefficients fixes du modèle polynomial sont déterminés lors d'une phase de calibration, à la conception du système, par régression polynomiale multiple à partir de données mesurées empiriquement, et stockés dans un circuit mémoire du dispositif électronique de contrôle du système.

Par exemple, lors de la phase de calibration, le système peut être installé dans une chambre de calibration permettant de faire varier la température ambiante $T_a$ et l'irradiation. On vient alors balayer la plage des valeurs de température ambiante $T_a$ auxquelles le module est susceptible d'être soumis en conditions réelles d'utilisation. Pour chaque valeur de température ambiante $T_a$, on fait varier l'irradiation de façon à balayer la plage d'irradiations auxquelles le module est susceptible d'être soumis en conditions réelles d'utilisation. Pour chaque valeur d'irradiation et pour chaque valeur de température ambiante $T_a$, on mesure le courant de court-circuit $I_{sc}$ et la tension de circuit ouvert $V_{oc}$. Les coefficients fixes du modèle sont ensuite déterminés par régression polynomiale multiple à partir des mesures réalisées.

Plus généralement, tout autre modèle mathématique permettant d'estimer la température ambiante à partir des mesures du courant de court-circuit $I_{sc}$ et de la tension de circuit ouvert $V_{oc}$ du module peut être utilisé pour calculer la valeur $T_a$ pendant des périodes d'irradiation solaire du module.

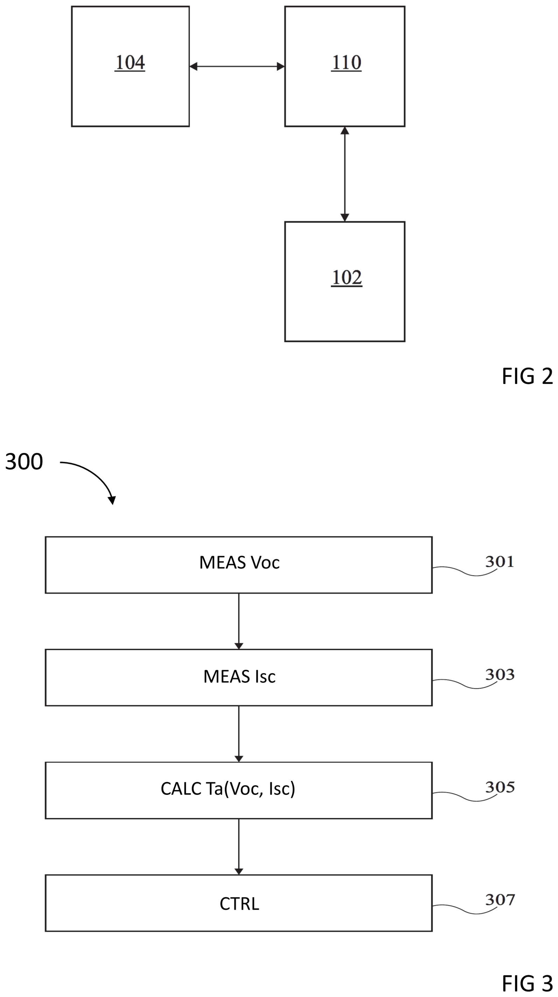

La figure 2 représente de façon schématique, sous forme de blocs, un exemple d'un système 100 de mesure de température selon un mode de réalisation. Le système 100 de la figure 2 peut être un système du type décrit en relation avec la figure 1, ou, plus généralement, tout système intégrant un module photovoltaïque 104. Le système 100 comprend un dispositif électronique de contrôle 110 relié au module photovoltaïque 104 et adapté à mesurer la tension de circuit ouvert $V_{oc}$ et le courant de court-circuit $I_{sc}$ du module. Le dispositif électronique de contrôle 110 est en outre relié à un élément commandable électriquement 102 du système. Le dispositif électronique 110 est configuré pour estimer la température ambiante $T_a$ au voisinage du module photovoltaïque 104 à partir de la tension $V_{oc}$ et du courant $I_{sc}$ en utilisant un modèle mathématique, par exemple du type décrit dans les demandes de brevet susmentionnées, et commander en conséquence l'élément 102.

La figure 3 représente de façon schématique, sous forme de blocs, un exemple d'un procédé 300 de mesure de la température ambiante $T_a$, mis en œuvre par le dispositif électronique de contrôle 110 dans un système du type décrit en relation avec la figure 2.

Le procédé comprend une étape 301 (« MEAS Voc ») de mesure de la tension de circuit ouvert $V_{oc}$ du module 104, suivie d'une étape 303 (« MEAS Isc ») de mesure du courant de court-circuit $I_{sc}$ du module. En pratique, l'ordre des étapes 301 et 303 peut être inversé. De préférence, les étapes 301 de mesure de la tension de circuit ouvert $V_{oc}$ du module 104 et 303 de mesure du courant de court-circuit $I_{sc}$ du module sont mises en œuvre dans un intervalle de temps rapproché, par exemple à moins d'une minute d'intervalle, afin de conserver des conditions sensiblement identiques de température et d'irradiation lors des deux mesures.

Le procédé comprend en outre, après les étapes 301 et 303, une étape 305 (« CALC Ta(Voc, Isc) ») de calcul de la température ambiante $T_a$ au voisinage du module à partir de la tension $V_{oc}$ et du courant $I_{sc}$, au moyen d'un modèle mathématique, par exemple tel que décrit dans les demandes de brevet susmentionnées.

Le procédé comprend en outre, après l'étape 305, une étape 307 (« CTRL ») de contrôle d'un élément 102 du système en tenant compte de la température ambiante $T_a$ calculée à l'étape 305.

Le procédé 300 est par exemple mis en oeuvre par le dispositif électronique de contrôle 110 lors d'une phase d'utilisation diurne du système.

Une limitation des procédés et systèmes décrits ci-dessus est qu'ils ne permettent pas de déterminer la température ambiante lorsque le module photovoltaïque ne reçoit pas ou pas suffisamment de rayonnement solaire, et en particulier pendant la nuit.

Plus particulièrement, les procédés et systèmes décrits ci-dessus permettent de déterminer la température ambiante uniquement pendant des phases d'utilisation diurnes du système.

Par phase d'utilisation diurne, on entend ici un intervalle de temps au cours duquel le module photovoltaïque 104 reçoit un rayonnement solaire, direct et/ou diffus, suffisant pour que la tension $V_{oc}$ et le courant $I_{sc}$ mesurés soient cohérents avec une évolution de la température ambiante. La phase d'utilisation diurne est par exemple délimitée par et comprise entre l'aube et le crépuscule d'une journée. L'aube et le crépuscule d'une journée sont par exemple déterminés respectivement par un premier seuil V1 et un deuxième seuil V2 de la tension de circuit ouvert $V_{oc}$ du module photovoltaïque. A titre d'exemple, la tension de circuit ouvert $V_{oc}$ du module :

- est inférieure aux seuils V1 et V2 au cours de la nuit ;
- croît au lever du soleil jusqu'à franchir le seuil V1 à l'aube ;
- est supérieure aux seuils V1 et V2 au cours de la journée ; et

- décroît au coucher du soleil jusqu'à devenir inférieure au seuil V2 au crépuscule.

Pendant la nuit, la tension de circuit ouvert $V_{oc}$ est par exemple comprise entre 0 % et 5 % de sa valeur nominale (c'est à dire la valeur annoncée par le constructeur pour une utilisation normale du module en journée).

La tension de circuit ouvert $V_{oc}$ est par exemple comprise entre 80 % et 110 % de sa valeur nominale pendant la journée.

A titre d'exemple, les seuils de tension V1 et V2 sont compris entre 5 et 25 %, par exemple entre 10 % et 15 %, de la valeur nominale. Par exemple, les seuils de tension V1 et V2 sont égaux.

Pendant des phases d'utilisation nocturnes du système (en dehors des phases d'utilisation diurnes), les mesures du courant de court-circuit $I_{sc}$ et de la tension de circuit ouvert $V_{oc}$ du module ne permettent pas d'estimer la température ambiante extérieure.

Par phase d'utilisation nocturne, on entend ici un intervalle de temps au cours duquel le module photovoltaïque 104 reçoit un rayonnement, direct et/ou diffus, relativement faible. La phase de mesure de température nocturne est par exemple délimitée par et comprise entre le crépuscule d'une journée et l'aube de la journée suivante.

Selon un aspect d'un mode de réalisation, on prévoit d'extrapoler l'évolution de la température ambiante nocturne à partir de deux valeurs $T_{a1}$ et $T_{a2}$ représentatives respectivement de la température ambiante au voisinage de l'aube de la journée précédant immédiatement la phase d'utilisation nocturne considérée et au voisinage du crépuscule de la journée précédent immédiatement la phase d'utilisation nocturne considérée. Les valeurs $T_{a1}$ et $T_{a2}$ sont calculées à partir de mesures du courant de court-circuit $I_{sc}$ et de la tension de circuit ouvert $V_{oc}$ du module pendant une phase d'utilisation diurne, au cours de la journée précédant immédiatement la phase d'utilisation nocturne considérée.

Plus particulièrement, selon un aspect d'un mode de réalisation, on prévoit de calculer une valeur $T_a'$ représentative de la température ambiante nocturne estimée au voisinage du module photovoltaïque, à partir des valeurs $T_{a1}$ et $T_{a2}$, en utilisant un modèle mathématique prédéfini ou une fonction mathématique prédéfinie représentative de l'évolution nocturne typique de la température extérieure du crépuscule d'une journée jusqu'à l'aube de la journée suivante.

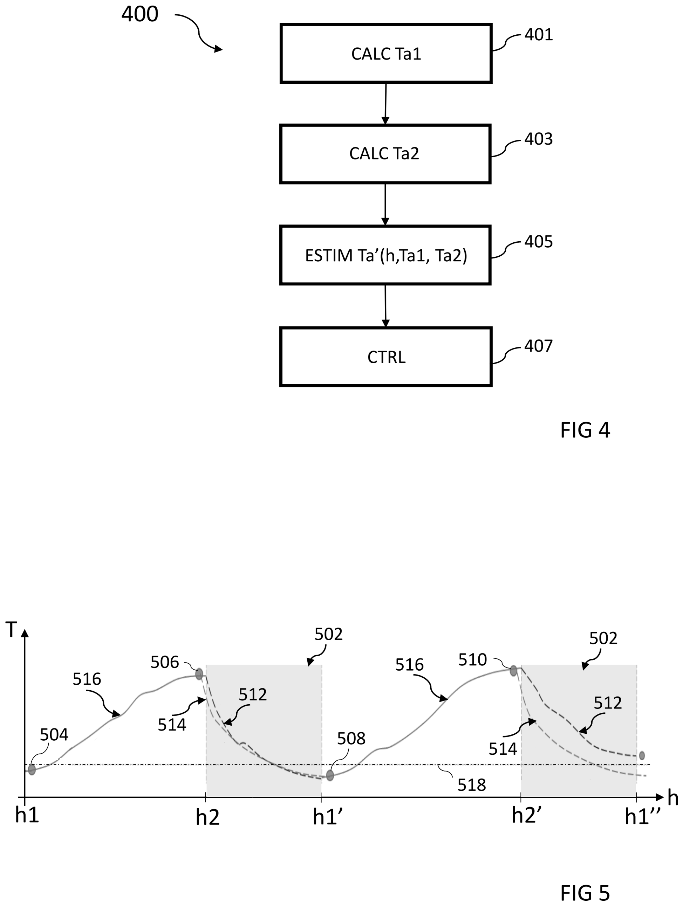

La figure 4 représente de façon schématique, sous forme de blocs, un exemple d'un procédé 400 de calcul d'une valeur $T_a'$ représentative de la température ambiante nocturne selon un mode de réalisation, mis en œuvre par le dispositif électronique de contrôle 110 dans un système du type décrit en relation avec la figure 2.

Le procédé comprend une étape 401 (« CALC Ta1 ») de détermination d'une valeur $T_{a1}$ représentative de la température au voisinage de l'aube de la journée précédant immédiatement la phase d'utilisation nocturne considérée, et une étape 403 (« CALC Ta2 ») de détermination d'une valeur $T_{a2}$ représentative de la température au voisinage du crépuscule de la journée précédant immédiatement la phase d'utilisation nocturne considérée. Dans l'exemple représenté, l'étape 403 est postérieure à l'étape 401. A titre de variante, l'ordre des étapes 401 et 403 peut être inversé.

Les températures d'aube $T_{a1}$ et de crépuscule $T_{a2}$ sont déterminées à partir de mesures du courant de court-circuit $I_{sc}$ et de la tension de circuit ouvert $V_{oc}$ pendant la phase d'utilisation diurne précédent la phase d'utilisation nocturne considérée, selon un procédé du type décrit en relation avec la figure 3.

A titre d'exemple, les étapes 301, 303 et 305 du procédé 300 de la figure 3 sont répétées à intervalle régulier, par exemple toutes les 1 à 30 minutes, par exemple toutes les 1 à 10 minutes, tout au long de la journée précédant la phase d'utilisation nocturne considérée, de façon à obtenir un ensemble de valeurs de température ambiante $T_a$ représentatif de l'évolution de la température ambiante au cours de la journée. Les valeurs de température ambiante $T_a$ de la journée sont par exemple mémorisées dans un circuit mémoire et sont utilisées pour calculer les valeurs $T_{a1}$ et $T_{a2}$ lors des étapes 401 et 402 du procédé 400.

A titre d'exemple, la température d'aube $T_{a1}$ correspond à la première valeur de température ambiante $T_a$ calculée lors de la phase de mesure de température diurne précédente, après le franchissement du seuil V1 par la tension de circuit ouvert $V_{oc}$.

A titre de variante, la température d'aube $T_{a1}$ est calculée à partir de plusieurs valeurs de température ambiante $T_a$ déterminées, au voisinage de l'aube, lors de la phase de mesure de température diurne précédant la phase d'utilisation nocturne considérée. A titre d'exemple, la température $T_{a1}$ est calculée en effectuant une moyenne des M premières valeurs de température ambiante $T_a$ calculées après le franchissement du seuil V1 par la tension de circuit ouvert $V_{oc}$, avec M entier strictement supérieur à 1, par exemple compris entre 2 et 10, par exemple égal à 5.

A titre de variante, la température d'aube $T_{a1}$ est calculée en effectuant une moyenne de l'ensemble des valeurs de température ambiante $T_a$ calculées après le franchissement du seuil V1 par la tension de circuit ouvert $V_{oc}$, pendant une période prédéfinie, par exemple comprise entre 5 et 30 minutes.

A titre d'exemple, la température de crépuscule $T_{a2}$ correspond à la dernière valeur de température ambiante $T_a$ calculée lors de la phase de mesure de température diurne précédente, avant le franchissement du seuil V2 par la tension de circuit ouvert $V_{oc}$.

A titre de variante, la température de crépuscule $T_{a2}$ est calculée à partir de plusieurs valeurs de température ambiante $T_a$ déterminées, au voisinage du crépuscule, lors de la phase de mesure de température diurne précédant la phase d'utilisation nocturne considérée. A titre d'exemple, la température $T_{a2}$ est calculée en effectuant une moyenne des N dernières valeurs de température ambiante $T_a$ calculées avant le franchissement du seuil V2 par la tension de circuit ouvert $V_{oc}$, avec N entier strictement supérieur à 1, par exemple compris entre 2 et 10, par exemple égal à 5.

A titre de variante, la température de crépuscule $T_{a2}$ est calculée en effectuant une moyenne de l'ensemble des valeurs de température ambiante $T_a$ calculées avant le franchissement du seuil V2 par la tension de circuit ouvert $V_{oc}$, pendant une période prédéfinie, par exemple comprise entre 5 et 30 minutes.

La température d'aube $T_{a1}$ et la température de crépuscule $T_{a2}$ sont par exemple stockées dans un circuit mémoire du dispositif électronique de contrôle 110 du système.

Le procédé 400 comprend en outre, après les étapes 401 et 403, une étape 405 (« ESTIM Ta' (h,Ta1,Ta2) ») d'estimation de la température ambiante nocturne $T_a'$ au voisinage du module à partir de la température $T_{a1}$ et de la température $T_{a2}$.

Pour cela, une fonction mathématique prédéfinie le dispositif électronique de contrôle et de traitement 110 met en œuvre une fonction mathématique prédéfinie ou un modèle mathématique prédéfini représentatif de l'évolution typique de la température nocturne entre une valeur de crépuscule donnée et une valeur d'aube donnée.

L'étape 405 peut être mise en œuvre à tout moment de la phase d'utilisation nocturne considérée. A ce moment, seule la température $T_{a2}$ au voisinage du crépuscule marquant le début de la nuit considérée est connue. Ne connaissant pas encore la température au voisinage de l'aube marquant la fin de la nuit considérée, on utilise, en approximation, la température $T_{a1}$ au voisinage de l'aube de la journée précédente, pour modéliser l'évolution de la température ambiante nocturne.

A titre d'exemple, la fonction mathématique utilisée pour estimer l'évolution de la température ambiante nocturne est une fonction linéaire définie comme suit :

[Math 3]

$$T_a'(h, Ta1, Ta2) = Ta2 + \frac{h - h2}{h1 - h2} \times (Ta1 - Ta2)$$

où h est une variable temporelle représentant l'heure à laquelle la température ambiante nocturne $T_a'$ est estimée, h1 correspond à l'heure de l'aube de la journée précédente (au voisinage de laquelle la température $T_{a1}$ a été estimée) et h2 correspond à l'heure du crépuscule de la journée précédente (au voisinage duquel la température $T_{a2}$ a été estimée).

L'utilisation d'une fonction linéaire présente l'avantage de limiter les ressources calculatoires nécessaires à l'estimation de la température ambiante nocturne $T_a'$. Une telle fonction ne représente toutefois pas de façon précise l'évolution de la température ambiante au cours de la nuit et tend généralement à surestimer la température nocturne dont l'évolution caractéristique est généralement exponentielle.

Ainsi, à titre de variante, la fonction mathématique utilisée pour estimer l'évolution de la température ambiante nocturne est une fonction de relaxation exponentielle définie comme suit :

[Math 4]

$$T_a'(h, Ta1, Ta2) = Ta1 + (Ta2 - Ta1) \times \exp(-a \times (h - h2))$$

où a correspond à un paramètre de relaxation. Le paramètre a est par exemple stocké dans une mémoire du dispositif électronique de contrôle 110 du système.

Plus généralement, toute autre fonction mathématique représentative de l'évolution typique de la température nocturne dans l'environnement d'utilisation considéré peut être utilisée, par exemple une fonction gaussienne, une fonction polynomiale, une fonction spline, par exemple cubique, etc.

A l'étape 405, la température ambiante nocturne $T_a'$ peut être calculée pour un ou plusieurs instants h de la nuit considérée. Par exemple, la température ambiante nocturne $T_a'$ peut être estimée pour un ensemble d'instants h régulièrement répartis tout au long de la nuit considérée, de façon à reconstruire une courbe représentative de l'évolution de la température ambiante nocturne au cours de la nuit. A titre d'exemple, l'intervalle de temps séparant deux valeurs de température ambiante nocturne estimée $T_a'$ consécutives est compris entre 1 et 30 minutes, par exemple entre 1 et 10 minutes.

Le procédé comprend en outre, après l'étape 405, une étape 407 (« CTRL ») de contrôle d'un élément 102 du système par le dispositif électronique de contrôle 110, en tenant compte d'au moins une valeur de la température ambiante

nocturne $T_a$' calculée à l'étape 405.

A titre d'exemple, dans le cas d'un système du type décrit en relation avec la figure 1, à l'étape 407, en période de forte chaleur, le dispositif électronique de contrôle 110 contrôle l'ouverture du volet roulant motorisé dans un état dit d'aération, permettant à l'air extérieur de pénétrer dans le bâtiment, à partir d'un instant h auquel la température ambiante nocturne estimée $T_a$' passe sous un seuil de température prédéfini.

A titre de variante, en période de moins forte chaleur, le dispositif électronique de contrôle 110 contrôle la fermeture du volet roulant motorisé, empêchant l'air extérieur de pénétrer dans le bâtiment, à partir d'un instant h auquel la température ambiante nocturne estimée $T_a$' passe sous un seuil de température prédéfini.

Plus généralement, le procédé susmentionné d'estimation de l'évolution de la température ambiante nocturne $T_a$' peut être utilisé pour toute autre application, par exemple pour commander un dispositif de chauffage à partir d'un instant h auquel la température ambiante nocturne estimée $T_a$' passe sous un seuil de température prédéfini, ou encore pour commander un dispositif de climatisation à partir d'un instant h auquel la température ambiante nocturne estimée $T_a$' passe au-dessus d'un seuil de température prédéfini.

Un système du type décrit en relation avec la figure 1 ou 2 peut en outre comprendre une sonde de température (non représentée), par exemple positionnée à proximité d'un moteur ou de cellules électrochimiques d'une batterie du système, pour mettre en œuvre des fonctions de contrôle et de sécurité. Une telle sonde n'est généralement pas adaptée à mesurer une température ambiante au voisinage du module photovoltaïque, en raison de l'inertie thermique importante du boîtier dans lequel elle est logée, ou du fait que les éléments contrôlés par cette sonde (moteur, batterie, etc.) ont généralement une température différente de la température ambiante extérieure.

Pendant des phases d'utilisation nocturne du système et notamment en fin de nuit, la température mesurée par une telle sonde peut toutefois s'approcher de la température ambiante extérieure du système.

Une telle sonde peut ainsi être utilisée pour détecter un éventuel écart entre la température ambiante nocturne réelle et la température ambiante nocturne $T_a$' estimée à l'étape 405.

A titre d'exemple, le procédé 400 comprend, après l'étape 405 et avant l'étape de 407, une étape (non représentée) de vérification de la cohérence entre la température ambiante nocturne $T_a$' estimée à l'étape 405 et une température réelle mesurée par une sonde interne au système. A titre d'exemple, si la température réelle mesurée par la sonde interne est inférieure à la température ambiante estimée $T_a$', la température réelle mesurée sera prise en compte pour la mise en œuvre de l'étape de commande 407. Dans le cas contraire, c'est la température estimée $T_a$' qui sera prise en compte pour la mise en œuvre de l'étape de commande 407.

La figure 5 est un diagramme illustrant schématiquement l'évolution, en fonction du temps h (en abscisse) de la température ambiante extérieure T (en ordonnée) dans un système du type décrit ci-dessus, sur une période de 48 heures comprenant deux journées et deux nuits.

L'instant h1 correspond à l'aube de la première journée. L'instant h2 correspond au crépuscule de la première journée. L'instant h1' correspond à l'aube de la deuxième journée. L'instant h2' correspond au crépuscule de la deuxième journée. L'instant h1" correspond à l'aube de la troisième journée (fin de la deuxième nuit).

Dans l'exemple de la figure 5, les deux zones grisées 502 correspondent aux deux phases de mesure de température nocturne, délimitées respectivement par les instants h2 et h1' et par les instants h2' et h1".

Lors des phases de mesure de température diurne, c'est-à-dire entre les instants h1 et h2 d'une part, et entre les instants h1' et h2' d'autre part, la température ambiante $T_a$ est calculée, par exemple par le procédé 300 décrit en relation avec la figure 3.

Une courbe 516 représente l'évolution de la température $T_a$ en fonction du temps entre pendant les phases de mesure de température diurne.

A titre d'exemple, la température ambiante $T_a$ est calculée à intervalles réguliers, par exemple toutes les 1 à 30 minutes tout au long des phases de mesure de température diurne.

La ou les premières températures ambiantes $T_a$, référencées 504, et la ou les dernières températures ambiantes $T_a$, référencées 506, calculées lors de la première phase de mesure de température diurne, sont enregistrées dans un circuit mémoire du système.

Pour la première phase de mesure de température nocturne, c'est-à-dire entre les instants h2 et h1', l'ensemble de valeurs représentatif de la température ambiante nocturne $T_a$' est calculé, par exemple par le procédé 400 décrit en relation avec la figure 4. La ou les températures 504 sont utilisées pour le calcul de la température d'aube $T_{a1}$ et la ou les températures 506 sont utilisées pour le calcul de la température de crépuscule $T_{a2}$.

Similairement, lors de la deuxième phase de mesure de température diurne, la ou les premières températures ambiantes $T_a$, référencées 508, et la ou les dernières températures ambiantes $T_a$, référencées 510, sont enregistrées dans un circuit mémoire du système.

Lors de la deuxième phase de mesure de température nocturne, c'est-à-dire entre les instants h2' et h1", l'ensemble de valeurs représentatif de la température ambiante nocturne $T_a$' est calculé, par exemple par le procédé 400 décrit en relation avec la figure 4. La ou les températures 508 sont utilisées pour le calcul de la température d'aube $T_{a1}$ et la ou les températures 510 sont utilisées pour le calcul de la température de crépuscule $T_{a2}$.

Une courbe 512 illustrant la température ambiante nocturne réelle et une courbe 514 illustrant la température ambiante nocturne estimée $T_a'$ sont représentées sur la figure 5.

Sur la figure 5, un trait horizontal 518 a été représenté, illustrant un seuil de canicule nocturne au-dessus duquel, selon un exemple de fonctionnement, le dispositif électronique de contrôle 110 maintient le volet roulant motorisé en position fermée, et en dessous-duquel, dans ledit exemple de fonctionnement, le dispositif électronique de contrôle 110 commande le volet roulant motorisé en position ouverte d'aération, par exemple en position relevée ou en position abaissée avec une orientation des lames constitutives du tablier permettant une circulation d'air.

Divers modes de réalisation et variantes ont été décrits. La personne du métier comprendra que certaines caractéristiques de ces divers modes de réalisation et variantes pourraient être combinées, et d'autres variantes apparaîtront à la personne du métier. En particulier, les modes de réalisation décrits ne se limitent pas aux exemples d'applications mentionnés explicitement ci-dessus, mais peuvent être adaptés à tout système intégrant un module photovoltaïque et dans lequel on peut tirer profit d'une mesure de température ambiante au voisinage du module photovoltaïque.

En outre, les modes de réalisation décrits ne se limitent pas à l'application susmentionnée à un système de type volet roulant motorisé. Plus généralement, la solution proposée peut s'appliquer à tout système comprenant un module photovoltaïque, et dans lequel on souhaite pouvoir mesurer la température ambiante au voisinage du module. Par exemple, le module photovoltaïque peut être installé sur un toit d'un bâtiment. La température ambiante au voisinage du module peut par exemple être exploitée par un dispositif électronique de contrôle pour piloter de façon automatique un système de chauffage ou de refroidissement du bâtiment, ou, simplement transmise à l'utilisateur via un dispositif d'affichage électronique, pour information.

Enfin, la mise en œuvre pratique des modes de réalisation et variantes décrits est à la portée de la personne du métier à partir des indications fonctionnelles données ci-dessus.

## Revendications

1. Procédé de détermination d'une température ambiante extérieure nocturne $T_a'$ dans un système comportant un module photovoltaïque (104), le procédé comprenant les étapes suivantes :

   a) déterminer, au moyen d'un dispositif électronique de traitement (110), à partir de mesures du courant de court-circuit $I_{sc}$ et de mesures de la tension de circuit ouvert $V_{oc}$ du module photovoltaïque (104), une première valeur $T_{a1}$ représentative de la température ambiante extérieure au voisinage de l'aube d'une première journée et une deuxième valeur $T_{a2}$ représentative de la température ambiante extérieure au voisinage du crépuscule de la première journée ; et

   b) calculer, au moyen du dispositif électronique de traitement (110), à partir de la première valeur $T_{a1}$ et de la deuxième valeur $T_{a2}$ déterminées à l'étape a), en utilisant une fonction mathématique $T_a'$ prédéfinie, un ensemble d'une ou plusieurs valeurs représentatif de l'évolution de la température ambiante extérieure nocturne au cours de la nuit suivant ladite première journée.

2. Procédé selon la revendication 1, dans lequel la fonction mathématique $T_a'$ est une fonction linéaire, gaussienne, polynomiale, spline, ou une fonction de relaxation exponentielle.

3. Procédé selon la revendication 2, dans lequel la fonction mathématique $T_a'$ est une fonction de relaxation exponentielle définie par la relation suivante :

[Math 4]

$$T_a'(h, Ta1, Ta2) = Ta1 + (Ta2 - Ta1) \times \exp(-a \times (h - h2))$$

où h est une variable temporelle, a est un paramètre de relaxation et h2 est un instant correspondant au crépuscule de la première journée.

4. Procédé selon la revendication 3, dans lequel le paramètre de relaxation a est stocké dans une mémoire du dispositif électronique de traitement (110).

5. Procédé selon l'une quelconque des revendications 1 à 4, dans lequel la première valeur $T_{a1}$ est déterminée à partir d'une ou plusieurs valeurs de température ambiante diurne, chaque valeur de température ambiante diurne étant calculée à partir à partir d'une mesure du courant de court-circuit $I_{sc}$ et d'une mesure de la tension de circuit ouvert $V_{oc}$ du module photovoltaïque (104) effectuées au voisinage de l'aube.

6. Procédé selon l'une quelconque des revendications 1 à 5, dans lequel la deuxième valeur $T_{a2}$ est déterminée à partir d'une ou plusieurs valeurs de température ambiante diurne, chaque valeur de température ambiante diurne étant calculée à partir à partir d'une mesure du courant de court-circuit $I_{sc}$ et d'une mesure de la tension de circuit ouvert $V_{oc}$ du module photovoltaïque (104) effectuées au voisinage du crépuscule.

7. Procédé selon l'une quelconque des revendications 1 à 6, dans lequel, à l'étape a), la valeur du courant de court-circuit $I_{sc}$ du module photovoltaïque est déterminée par mesure d'une tension aux bornes d'une résistance de shunt connectée aux bornes du module photovoltaïque (104).

8. Procédé selon la revendication 7, dans lequel la valeur de la résistance de shunt est telle que la tension aux bornes de la résistance de shunt lors de la mesure du courant de court-circuit $I_{sc}$ du module photovoltaïque (104) est inférieure à 5 % de la tension de circuit ouvert $V_{oc}$ du module photovoltaïque (104).

9. Procédé selon l'une quelconque des revendications 1 à 8, comportant en outre une étape de commande d'un élément commandable électriquement (102) du système en tenant compte d'au moins une valeur de la température ambiante nocturne calculée à l'étape b).

10. Système (100) comprenant un module photovoltaïque (104) et un dispositif électronique de traitement (110) configuré pour mettre en œuvre un procédé selon l'une quelconque des revendications 1 à 9.

11. Système (100) selon la revendication 10, comprenant un dispositif d'occultation motorisé alimenté par le module photovoltaïque (104).

FIG 1

```
┌──────────────┐          ┌──────────────┐
│              │          │              │
│     104      │◄────────►│     110       │
│              │          │              │
└──────────────┘          └──────┬───────┘
                                 │
                                 ▼
                          ┌──────────────┐
                          │              │
                          │     102       │
                          │              │
                          └──────────────┘
```

FIG 2

300

```
┌───────────────────────────────────┐
│            MEAS Voc               │  ~ 301
└─────────────────┬─────────────────┘
                  │
                  ▼
┌───────────────────────────────────┐
│            MEAS Isc               │  ~ 303
└─────────────────┬─────────────────┘
                  │
                  ▼
┌───────────────────────────────────┐
│         CALC Ta(Voc, Isc)         │  ~ 305
└─────────────────┬─────────────────┘
                  │
                  ▼
┌───────────────────────────────────┐
│               CTRL                │  ~ 307
└───────────────────────────────────┘
```

FIG 3

400

CALC Ta1 — 401

CALC Ta2 — 403

ESTIM Ta'(h,Ta1, Ta2) — 405

CTRL — 407

FIG 4

FIG 5

**EP 4 764 436 A1**

Europäisches
Patentamt

European
Patent Office

Office européen
des brevets

**RAPPORT DE RECHERCHE EUROPEENNE**

Numéro de la demande

EP 25 22 4859

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | EP 4 230 980 B1 (COMMISSARIAT ENERGIE ATOMIQUE [FR]; BHG [FR]) 14 février 2024 (2024-02-14) * abrégé * * alinéas [0001], [0006] * * le document en entier * ----- | 1-11 | INV. G01K7/00 G01K7/42 |
| | | | DOMAINES TECHNIQUES RECHERCHES (IPC) |
| | | | G01K |

Le présent rapport a été établi pour toutes les revendications

| Lieu de la recherche | Date d'achèvement de la recherche | Examinateur |
|---|---|---|
| La Haye | 14 avril 2026 | Bagnera, Carlo |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 25 22 4859

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

14-04-2026

| Document brevet cité au rapport de recherche | | Date de publication | Membre(s) de la famille de brevet(s) | | Date de publication |
|---|---|---|---|---|---|
| EP 4230980 | B1 | 14-02-2024 | EP | 4230980 A1 | 23-08-2023 |
| | | | ES | 2976188 T3 | 26-07-2024 |
| | | | FR | 3132948 A1 | 25-08-2023 |
| | | | PL | 4230980 T3 | 10-06-2024 |

EPO FORM P0460

Pour tout renseignement concernant cette annexe : voir Journal Officiel de l'Office européen des brevets, No.12/82

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- FR 2009735
- FR 2201446
- FR 2306348

**Littérature non-brevet citée dans la description**

- **W. DE SOTO et al.** Improvement and validation of a model for photovoltaic array performance. *Solar Energy*, 2006, vol. 80, 78-88